**Europäisches Patentamt**

**European Patent Office**

**Office européen des brevets**

(11) Veröffentlichungsnummer: **0 119 411**
A2

## (12) EUROPÄISCHE PATENTANMELDUNG

(21) Anmeldenummer: 84100861.8

(22) Anmeldetag: 27.01.84

(51) Int. Cl.³: **B 01 D 39/06**

(30) Priorität: 18.02.83 DE 3305559

(43) Veröffentlichungstag der Anmeldung: 26.09.84
Patentblatt 84/39

(84) Benannte Vertragsstaaten: **AT BE CH DE FR GB IT LI LU NL**

(71) Anmelder: **Lübecker Perlit Franz Potenberg KG (GmbH & Co.), Herrenwyker Strasse 6, D-2400 Lübeck (Herrenwyk) (DE)**

(72) Erfinder: **Steinmeyer, Siegfried, Saatweg 6, D-2400 Lübeck 14 (DE)**

(74) Vertreter: **Dipl.-Ing. H. Hauck Dipl.-Phys. W. Schmitz Dipl.-Ing. E. Graalfs Dipl.-Ing. W. Wehnert Dr.-Ing. W. Döring, Neuer Wall 41, D-2000 Hamburg 36 (DE)**

(54) **Verfahren zur Herstellung eines Perlit-Filterhilfsmittels.**

(57) Geblähtes Perlit wird auf einer Walzenmühle gemahlen und das Mahlgut gesichtet. Das anfallende Produkt hat gegenüber Perlit-Filterhilfsmittel nach dem Stand der Technik, das in Schlag- oder Prallmühlen gemahlen ist, eine wesentlich geringere Naßdichte, ein geringeres Schüttgewicht, gleichmäßigere Partikelgröße und größeres Porenvolumen sowie einen erheblich kleineren Anteil an Schwimmern, woraus höhere Durchsatzleistungen und längere Standzeiten bei guten Klärschärfen resultieren. Es ist auch ein abgewandelter, als Sichter wirkender Zyklon, mit dem sich das Verfahren mit Vorteil durchführen läßt, offenbart.

/

Die Erfindung betrifft ein Verfahren zur Herstellung eines
Perlit-Filterhilfsmittels, das insbesondere für die Anschwemmfiltration geeignet ist.

Zu filtrierendes Gut, das sehr feinteilige Feststoffe, kolloidale
oder schleimige Substanzen enthält, wie zum Beispiel Abwasser,
in dem Öl, Lack, Kunstharz, Eiweißstoffe emulgiert oder suspendiert ist, läßt sich nur schwer und mit großem Zeitaufwand
durch übliche Filtermittel filtrieren, weil diese zu schnell
verstopft werden oder nicht engporig genug sind. Daher wendet
man bei derartigem Filtriergut die Anschwemmfiltration an. Dabei
wird auf Filtermitteln, wie Filterpressen, Kerzenfilter,
Vakuum-Drehtrommelfilter, Druckfilter mit vertikal oder
horizontal angeordneten Siebböden und dergleichen, ein Filterhilfsmittel in der gewünschten Schichtdicke angeschwemmt.
Während der Filtration baut sich auf diesen Anschwemmschichten
der Filterkuchen auf und kann leicht abgehoben werden. Es ist
auch möglich, das Filterhilfsmittel zusammen mit dem Filtriergut
aufzugeben, wenn der Filterrückstand mit dem Filterhilfsmittel
verworfen werden kann oder sich von diesem leicht abtrennen
läßt. Wenn das Anschwemmfilter erschöpft ist, d.h. die Durchsatzleistung zu gering geworden ist, läßt sich die Anschwemmschicht leicht vom Filter abheben oder abschaben und durch
eine neue ersetzen.

Ein Kriterium für die Wirtschaftlichkeit und die Wirksamkeit
der Anschwemmfilter ist die sogenannte Standzeit, das ist die

2

Zeit von Beginn der Filtration bis zu dem Zeitpunkt, an dem zu wenig Filtrat aus dem Filter austritt, also die Durchsatzleistung zu gering ist, oder der Druck bzw. das Vakuum, das zur Aufrechterhaltung der Durchsatzleistung erforderlich ist, den zulässigen Höchstwert überschreitet.

Als Filterhilfsmittel für die Anschwemmfiltration werden Kieselgur verschiedenen Feinheitsgrades, Zellulose, Holzmehl, Perlit-Filterhilfsmittel und dergleichen, einzeln oder in Kombination untereinander verwendet. Bei der Druck- und der Vakuum-Filtration, bei der hoher Durchsatz und hohe Klärschärfe gefordert werden, werden bisher aktivierte Kieselguren bevorzugt eingesetzt. Perlit-Filterhilfsmittel verwendete man nur in den Fällen, in denen geringe Ansprüche an die Klärschärfe gestellt werden.

Das bekannte Perlit-Filterhilfsmittel wird meist durch Mahlen von geblähtem Perlit in     Schlag- oder Prallmühlen und anschließendes Sichten hergestellt.Die zum Mahlen benötigte Energie ist relativ hoch und liegt bei etwa 80 kWh/1000kg. Die Naßdichte mit  etwa 160  g/l ist relativ hoch. Der Anteil der bekannten Perlit-Filterhilfsmittel an Feinteilen ist groß, worauf die relativ niedrigen Durchsatzleistungen und kurzen Standzeiten zurückzuführen sind.Sichtet man die Feinteile aus,so verringert sich die Klärschärfe.Außerdem fallen bei dem herkömmlichen Verfahren erhebliche Anteile an sogenannten "Schwimmern" an; das sind ungemahlene Perlitkörner mit geschlossenen Zellen, die folglich sehr leicht sind.Sie werden beim Sichten nur zum Teil abgetrennt und sind bei der Filtration unwirksam und störend.

J

Der Erfindung liegt die Aufgabe zugrunde, ein Verfahren anzugeben, bei welchem ein Perlit-Filterhilfsmittel erhalten wird,
mit dem sich bessere Durchsatzleistungen, längere Standzeiten
und die gewünschten Klärschärfen erreichen lassen. Das Verfahren soll variierbar sein, so daß ein dem jeweiligen Verwendungszweck angepaßtes Produkt anfällt. Es soll ein Perlit-
Filterhilfsmittel mit gegenüber den bekannten Perlit-Filterhilfsmitteln verbesserten Filtriereigenschaften zur Verfügung
gestellt werden. Darüber hinaus soll ein zur Durchführung des
Verfahrens geeigneter Sichter vorgeschlagen werden.

Die Aufgabe wird durch das Verfahren des Anspruches 1, das
Perlit-Filterhilfsmittel des Anspruches 9 und den abgewandelten,
als Sichter wirkenden Zyklon des Anspruchs 11 gelöst. Bevorzugte
Ausführungsformen sind in den Unteransprüchen angegeben.

Es ist gefunden worden, daß wenn geblähtes Perlit nicht wie bisher
in Schlag-oder Prallmühlen,sondern in einer Walzenmühle gemahlen
wird, ein Produkt erhalten wird, das viel bessere Eigenschaften
als Filterhilfsmittel besitzt.

Geblähtes Perlit hat bekanntlich eine mehrschalige schaumartige
Struktur, also ein großes Porenvolumen. Untersuchungen der
Anmelderin haben gezeigt, daß beim Mahlen von geblähtem Perlit in
einer Hammermühle neben schalenförmigen Partikeln, also Partikeln mit gekrümmten Flächen und dazwischenliegenden Stegen, viel Feinteile (fein zerteilte Partikel) mit glatten Flächen sowie Schwimmer erhalten werden. Beim Mahlen in der Walzenmühle dagegen bleibt die schalenförmige Struktur weitgehend erhalten; der Anteil an Feinteilen und Schwimmern ist gering. Folglich ist das Porenvolumen eines auf der Walzenmühle gemahlenen Produkts höher als eines in einer Schlag- oder Prallmühle gemahlenen.

Durch die schalenförmigen Partikel werden Hohlräume in der Filterschicht gebildet,die teilweise von den Feinteilen ausgefüllt werden. Je größer der Anteil eines Filterhilfsmittels an schalenförmigen Partikeln ist, um so höher ist die Durchsatzleistung der damit hergestellten Filterschicht. Entfernt man den Anteil an Feinteilen, verbessert sich die Durchsatzleistung bei Verringerung der Klärschärfe.

Das erfindungsgemäß erhaltene Perlit-Filterhilfsmittel hat einen so hohen Anteil an schalenförmigen Partikeln, daß erheblich bessere Durchsatzleistungen und Standzeiten bei guter Klärschärfe erreicht werden. Die Naßdichte liegt gewöhnlich im Bereich von etwa 110 bis 130 g/l, die durchschnittliche Partikelgröße im Bereich von 40 bis 150 µm und das Porenvolumen ist mindestens 94%.Der Anteil an Schwimmer beträgt maximal 5 Vol.-%. Ein besonders bevorzugtes Perlit-Filterhilfsmittel nach der Erfindung hat eine Naßdichte von 120 g/l, eine durchschnittliche Partikelgröße im Bereich von etwa 100 bis 110 µm und ein Porenvolumen von 95%.

Ein derartiges Perlit-Filterhilfsmittel wird nach dem Verfahren der Erfindung erhalten, das nachstehend näher beschrieben wird. Es sei jedoch bemerkt, daß Perlit-Filterhilfsmittel mit Eigenschaften, die außerhalb der eben angegebenen Eigenschaftsbereiche liegen, und nach dem erfindungsgemäßen Verfahren
hergestellt worden sind, ebenfalls die vorstehend angegebenen
Vorteile gegenüber den bekannten Perlit-Filterhilfsmitteln
aufweisen. Graduelle Unterschiede in den Eigenschaften, angepaßt an den jeweiligen Einsatzzweck, lassen sich durch die
Verfahrensführung erreichen.

Bei dem Verfahren nach der Erfindung wird gebiähtes Perlit in
einer Walzenmühle mit einstellbarer Spaltbreite gemahlen. Die
Spaltbreite wird je nach der gewünschten Durchsatzleistung
eingestellt. So haben sich Spaltbreiten im Bereich von 0 bis
0,4 mm als gut geeignet erwiesen. Je höher die Durchsatzleistung
des Filterhilfsmittels sein soll, um so größer wird der Walzenspalt eingestellt.

Die Walzen können übliche glatte Walzen sein und mit gleichen
oder unterschiedlichen Geschwindigkeiten umlaufen. Drehzahlen
im Bereich von 80 bis 120 Upm sind besonders geeignet, gleichmäßig gemahlenes Gut in akzeptabler Zeit zu erhalten.

Soll die Einzugsgeschwindigkeit erhöht werden, so wird ein
Walzenstuhl mit eine Riffelung aufweisenden Walzen verwendet.
Bevorzugt werden Walzen mit axial verlaufenden Rillen von
Sägezahnform. Die Tiefe der Rillen ist gering und kann zum
Beispiel im Bereich von 0,4 bis 0,75 mm, der Zahnabstand zum
Beispiel im Bereich von 0,8 bis 1,2 mm liegen. Bevorzugt wird
eine Rillentiefe von 0,5 mm und ein Zahnabstand von 1 mm.

6

Das aus dem Walzenstuhl kommende Mahlgut wird dann gesichtet, um Sand und Grobkorn zu entfernen, das zum Walzenstuhl zurückgeführt wird. Das Sichten kann in irgendeinem Sichter bekannter Bauart durchgeführt werden. Vorzugsweise werden zwei Sichter hintereinander angeordnet und das Hauptprodukt des ersten Sichters im zweiten Sichter nochmals gesichtet, um allen Sand und Grobkorn zu entfernen und ein Produkt geringerer Naßdichte und größerer Oberfläche bzw. größerem Porenvolumen zu erhalten. In einem mehrmals wiederholten Beispiel wurde im ersten Sichter im wesentlichen alles Grobkorn und Sand entfernt und vor der Rückführung zur Walzenmühle der Sand vom Grobkorn getrennt. Das Hauptprodukt des zweiten Sichters hatte ein Schüttgewicht von 60 bis 80 g/l, eine Naßdichte von 120 bis 130 g/l und eine durchschnittliche Partikelgröße von 60 bis 110 µm. Das Porenvolumen lag bei 94,2% und der Schwimmeranteil war unter 5%. Wenn gewünscht, können die Werte durch Verwendung eines dritten Sichters noch verbessert werden. In einem weiteren Beispiel wurde ein Perlit-Filterhilfsmittel einer Naßdichte von 125 g/l, einer durchschnittlichen Partikelgröße von 100 µm und eines Porenvolumens von 95% erhalten.

Nach einer besonders bevorzugten Ausführungsform des erfindungsgemäßen Verfahrens wird das Sichten in einem abgewandelten Zyklon vorgenommen, dessen zylindrischer Teil in den konischen Teil eintaucht und der in dem Verbindungsflansch von zylindrischem Teil und konischem Teil Durchlaßöffnungen aufweist, durch welche ein Luftstrom eingelassen wird.

7

Zyklone sind in vielen Ausführungsformen bekannt. Sie werden jedoch nicht zum Sichten, sondern zum Abscheiden von festen Teilchen aus Gasen verwendet. In der DE-OS 30 12 722 ist ein Zyklon beschrieben, der verstellbare Durchgänge in dem Verbindungsflansch von Oberteil mit konischem Unterteil aufweist. Die Durchgänge verlaufen parallel zur Längsachse des Zyklons. Durch sie eingesaugte Luft soll die Innenwand des konischen Teils sauberhalten.

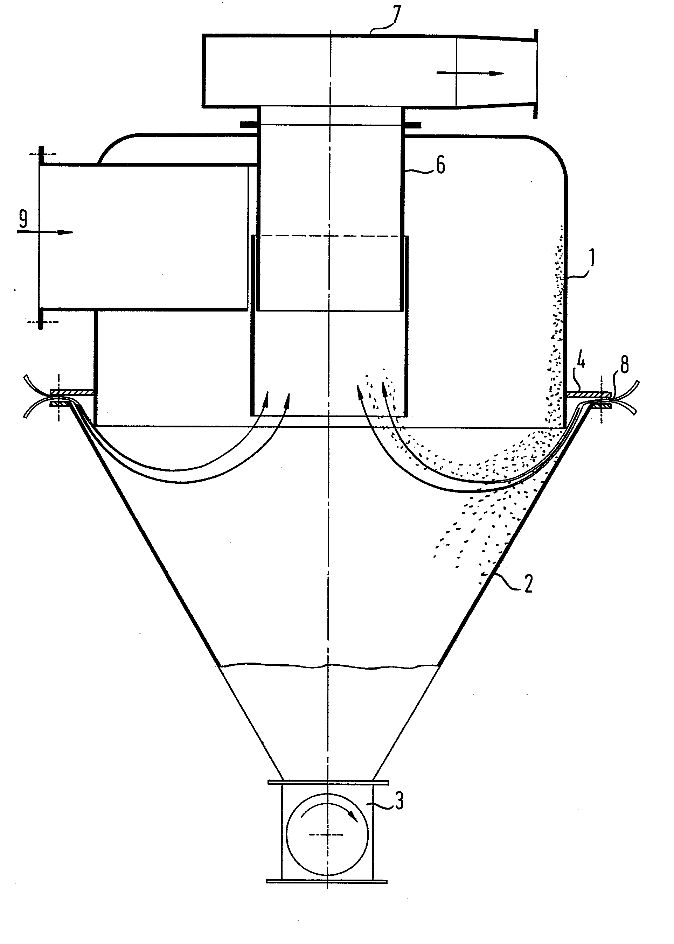

Der abgewandelte Zyklon nach der Erfindung, der in der beigefügten Figur schematisch dargestellt ist, ist von anderer Bauart und Funktionsweise. Er wird nachstehend unter Bezugnahme auf die Figur erläutert.

Der Zyklon hat einen zylindrischen Oberteil 1, an den sich nach unten zu ein konischer Teil 2 anschließt, an dessen unterem Ende eine Schleuse 3 zum Austragen von Grobkorn und Sand angebracht ist. Beide Teile 1, 2 sind durch eine Flanschverbindung 4 miteinander verbunden. In der Mitte des zylindrischen Teils 1 befindet sich ein Tauchrohr 6. Der zylindrische Teil 1 taucht mit seinem unteren Ende in den konischen Teil 2 ein, ragt also über die Flanschverbindung 4 hinaus. An seinem oberen Ende ist ein Drallkörper 7 angebracht. In der Flanschverbindung 4 sind durch Stellschrauben (nicht gezeigt) einstellbare Durchlaßöffnungen 8 oder ein durchgehender Durchlaßspalt vorgesehen.

8

Ein mit dem zu sichtenden Mahlgut beladener Luftstrom wird bei 9 tangential in den zylindrischen Teil 1 des Zyklons eingeführt, wodurch ihm eine Zentrifugalbeschleunigung erteilt wird. Die Feststoffteilchen werden an die Innenwand geschleudert und dabei gebremst. Bei einem normalen Zyklon fallen sie nach unten in den konischen Teil, aus dem sie ausgetragen werden. Die Luft wird durch das Tauchrohr nach oben abgeführt.

Durch die Vorsehung der Durchgangsöffnungen oder des Spaltes 8 strömt Luft senkrecht zur Längsachse des Zyklons in diesen ein, strömt an dem, in den konischen Teil 2 eintauchenden Ende des Oberteils 1 vorbei und hindert die mittelschweren und leichten Teilchen am Herunterfallen. Der Luftstrom nimmt diese Teilchen mit und führt sie durch das Tauchrohr ab, wo die ausgetragenen Partikel aus dem Luftstrom herausfallen und als Sichtgut gesammelt werden, während die ausströmende Luft Staubteilchen mitnimmt. Durch die Bewegung des Drallkörpers 7 wird die Ausströmgeschwindigkeit noch erhöht. Sand und Grobkorn, das zu schwer ist, um vom Luftstrom getragen zu werden, fallen durch den konischen Teil 2 und werden nach Austritt aus der Schleuse 3 zum Walzenstuhl zurückgeführt.

Bei Verwendung dieses in einen Sichter abgewandelten Zyklons läßt sich die Beschaffenheit des Endprodukts auf einfache Weise an den jeweiligen Anwendungszweck anpassen. Je größer die Spaltbreite oder die Höhe der Durchlaßöffnungen 8 gewählt wird, um so mehr Luft kann einströmen und um so mehr Teilchen größeren

9

Durchmessers werden aus dem in den Zyklon eingeführten Mahlgut als Sichtgut mitgerissen und Feinteile beim Austritt aus dem Zyklon mit dem Luftstrom abgeführt. Es wird also ein Sichtgut mit einem höheren Anteil an größeren Partikeln erhalten, was bedeutet, daß das Filterhilfsmittel eine höhere Durchsatzleistung haben wird. Wird dagegen die Spaltbreite 8 kleiner eingestellt, so wird ein Filterhilfsmittel von geringerer Durchsatzleistung, aber größerer Klärschärfe erhalten.

Ein weiterer Vorteil dieses abgewandelten Zyklons liegt darin, daß keine Einbauten, wie zum Beispiel beim Spiralwindsichter vorhanden sind. Es ist also keine Wartung erforderlich und der Verschleiß kaum feststellbar. Energie wird nur dazu benötigt, der Luft die zur Förderung und Entstaubung benötigte Strömungsgeschwindigkeit zu verleihen. Der als Sichter abgewandelte Zyklon ist nicht auf die Verwendung in dem Verfahren nach der Erfindung beschränkt. Er kann selbstverständlich zum Sichten anderer, in einem Gasstrom verteilter Feststoffpartikelgemische verwendet werden.

Das erfindungsgemäß erhaltene Perlit-Filterhilfsmittel kann schwer filtrierbarem Filtergut direkt zugesetzt werden. Besonders vorteilhaft ist seine Verwendung bei der Anschwemmfiltration auf Vakuum-Drehtrommelfiltern, bei denen ein hoher Durchsatz bei relativ hoher Klärschärfe gefordert wird. Dieser Filtertyp wird häufig bei Filtriergut eingesetzt, das einen hohen Feststoffgehalt aufweist, insbesondere bei Schlämmen aus chemischen

*10*

Fabriken, die Eisen, Aluminium und dergleichen in Form von
voluminösen Hydroxiden enthalten oder mit kolloidalen oder
stark klebenden Stoffen beladenen Abwässern. Hierbei ist der
Vakuum-Drehtrommelfilter deshalb vorteilhaft, weil bei hohem
Flüssigkeitsdurchsatz während der Rotorumdrehung der Filterkuchen mit der obersten mit Trübstoffen beladenen Schicht der
Anschwemmschicht laufend von der Anschwemmschicht abgeschabt
werden kann. Sind die abzutrennenden Partikel aber niedermolekulare Substanzen, so dringen sie tiefer in die Anschwemmschicht ein und die Filterleistung wird innerhalb kurzer Zeit
stark herabgesetzt, obwohl die obere Schicht stets freigelegt
wird. In diesen Fällen ist das erfindungsgemäß erhaltene Perlit-
Filterhilfsmittel mit besonderem Vorteil einzusetzen, was aus
den nachstehenden Beispielen hervorgeht.

## Beispiel 1 - Filtration von Hefeautolysaten

Das Ausgangsprodukt enthielt verschiedene lösliche und unlösliche Aminosäuren sowie Reste der Hefezellenschalen mit
geringem Zelluloseanteil. Der Trockensubstanzgehalt war ca. 35%.
Das Produkt war verhältnismäßig dünnflüssig und neigte zur
Schaumbildung.

Gleiche Mengen dieses Hefeautolysats wurden auf gleich großen
Vakuum-Drehtrommelfiltern filtriert und zwar einmal mit einer
Anschwemmschicht aus Perlit-Filterhilfsmittel nach dem Stand

// 

der Technik und einmal mit einer Anschwemmschicht aus Perlit-Filterhilfsmittel nach der Erfindung.

Zur Anschwemmung einer 50 mm dicken Schicht wurden von dem Perlit-Filterhilfsmittel nach dem Stand der Technik 75 kg benötigt, von dem Perlit-Filterhilfsmittel nach der Erfindung aber nur 38 kg. Bei letzterem konnte durch Reduzierung des Schälmesservorschubs bei gleicher Durchflußleistung die Standzeit verlängert werden. Die Klärschärfe war in beiden Fällen etwa gleich. Durch die längere Standzeit waren nur noch zwei anstatt drei Anschwemmungen pro Tag erforderlich, was einer Maschinenausfallzeit von ca. 2 Stunden anstatt sonst 3 Stunden entspricht. Der spezifische Filterhilfsmittelverbrauch wurde, bezogen auf den Trockensubstanzgehalt des Fertigprodukts, von 3,6 kg pro 100 kg auf 2,2 kg pro 100 kg reduziert.

Beispiel 2 - Filtration von Abwasser, das Ölemulsion sowie emulgierte und suspendierte Reste von Farben, Lacken, Firnissen und Kunstharzen enthielt

Benutzt wurde ein Vakuum-Drehtrommelfilter einer Filterfläche von 7 $m^2$; es wurde ein Druck von 0,6 bar angewendet.

Die Ausgangssubstanz enthielt 5% Feststoffe und wurde zunächst in einem Reaktionstank mit einem Gemisch aus Eisen-Aluminiumchlorid behandelt, um die Emulsion zu brechen. Danach wurde Polyelektrolyt zugesetzt. Das nunmehr vorliegende Aufgabegut

*12*

enthielt 30 Vol.-% Trübstoffe mit hohen Hydroxidanteilen.

Gleiche Teile, nämlich 40 m$^3$ dieser Schlammemulsion wurden

a) unter Verwendung einer Anschwemmschicht aus Kieselgur und

b) unter Verwendung einer Anschwemmschicht aus dem Perlit-Filterhilfsmittel filtriert. Die Anschwemmschicht hatte in beiden Fällen eine Dicke von 7,5 cm. Dazu wurden benötigt:

   a) bei Kieselgur:

      erste Anschwemmung     68 kg

      zweite Anschwemmung   102 kg

   Gesamtmenge pro Schicht       170 kg


   b) bei Perlit-Filterhilfsmittel

      erste Anschwemmung     36 kg

      zweite Anschwemmung    45 kg

   Gesamtmenge pro Schicht       81 kg.


Daraus ergibt sich eine Filterhilfsmitteleinsparung bei dem Perlit-Filterhilfsmittel gegenüber Kieselgur von 50%.

In beiden Fällen wurde festgestellt, daß die gelegentlich auftretenden Ablösungen von der Trommel mit dem neuen Filterhilfsmittel nicht in Erscheinung traten, d.h. die Filterfläche wird optimal genutzt. Dies ist auf die Kornstruktur mit deutlich bessserem innerem Zusammenhalt der Filtermittelschicht zurückzuführen.

31 920-22

PATENTANWÄLTE
DR.-ING. H. NEGENDANK (1970)
HAUCK, SCHMITZ, GRAALFS, WEHNERT, DÖRING
HAMBURG    MÜNCHEN    DÜSSELDORF

_ / _

PATENTANWÄLTE · NEUER WALL 41 · 2000 HAMBURG 36

Dipl.-Phys. W. SCHMITZ · Dipl.-Ing. E. GRAALFS
Neuer Wall 41 · 2000 Hamburg 36
Telefon + Telecopier (040) 36 67 55
Telex 02 11 769 input d

Dipl.-Ing. H. HAUCK · Dipl.-Ing. W. WEHNERT
Mozartstraße 23 · 8000 München 2
Telefon + Telecopier (089) 53 92 36
Telex 05 216 553 pamu d

Dr.-Ing. W. DÖRING
K.-Wilhelm-Ring 41 · 4000 Düsseldorf 11
Telefon (02 11) 57 50 27

Lübecker Perlit
Franz Potenberg KG (GmbH & Co.)
Herrenwyker Str. 6

2400 Lübeck 14 (Herrenwyk)

ZUSTELLUNGSANSCHRIFT / PLEASE REPLY TO:     HAMBURG, 26. Januar 1984

## Verfahren zur Herstellung eines Perlit-Filterhilfsmittels

Ansprüche:

1. Verfahren zur Herstellung eines Perlit-Filterhilfsmittels,
   das insbesondere für die Anschwemmfiltration geeignet ist,
   dadurch gekennzeichnet, daß a) gebläthes Perlit in einer
   Walzenmühle einstellbarer Spaltbreite gemahlen wird und
   b) das Mahlgut gesichtet und dabei abgetrenntes Grobkorn
   und Sand zur Walzenmühle zurückgeführt wird.

2. Verfahren nach Anspruch 1, dadurch gekennzeichnet, daß das
   Mahlen auf einem Walzenstuhl mit unterschiedlichen Drehzahlen beider Walzen vorgenommen wird.

European Patent Attorneys     Zugelassene Vertreter beim Europäischen Patentamt
Deutsche Bank AG Hamburg, Nr. 05/28 497 (BLZ 200 700 00) · Postscheck Hamburg 2842-208
Dresdner Bank AG Hamburg, Nr. 933 60 35 (BLZ 200 800 00)

3. Verfahren nach Anspruch 1 oder 2, dadurch gekennzeichnet, daß das Mahlen auf einem Walzenstuhl, dessen Walzen eine Riffelung aufweisen, vorgenommen wird.

4. Verfahren nach Anspruch 3, dadurch gekennzeichnet, daß Walzen verwendet werden, die axiale Rillen von Sägezahnform einer Tiefe von etwa 0,5 mm und einem Zahnabstand von etwa 1 mm aufweisen.

5. Verfahren nach einem der Ansprüche 1 bis 4, dadurch gekennzeichnet, daß das Sichten in mindestens zwei hintereinander angeordneten Sichtern vorgenommen wird.

6. Verfahren nach einem der Ansprüche 1 bis 4, dadurch gekennzeichnet, daß das Sichten in einem Zyklon vorgenommen wird, der derart abgewandelt ist, daß am Übergang des zylindrischen Teils des Zyklons in den konischen Teil Luft senkrecht zur Längsachse des Zyklons einströmen gelassen wird, welche die Partikel leichteren spezifischen Gewichts als das des Sandes und des Grobkorns in und durch das Tauchrohr mitnimmt.

7. Verfahren nach Anspruch 6, dadurch gekennzeichnet, daß die Breite des Luftspalts der gewünschten Durchflußleistung des Verfahrensprodukts angepaßt wird.

8. Verfahren nach Anspruch 7, dadurch gekennzeichnet, daß ein Luftstrom eingeführt wird, der so stark ist, daß er nach Verlassen des Zyklons Staub und Feinteile mitnimmt, während sich die gewünschte Fraktion aus dem Luftstrom abscheidet.

9. Perlit-Filterhilfsmittel, gekennzeichnet durch ein Schüttdichte im Bereich von etwa 60 bis 80 g/l, eine Naßdichte im Bereich von etwa 110 bis 130 g/l, eine durchschnittliche Partikelgröße im Bereich von etwa 40 bis 150 µm, ein Porenvolumen von mind. 94% und einen Gehalt an Schwimmern von max. 5 Vol.-%.

10. Perlit-Filterhilfsmittel nach Anspruch 9, gekennzeichnet durch eine Naßdichte von etwa 120 g/l, eine durchschnittliche Partikelgröße im Bereich von etwa 100 bis 110 µm und ein Porenvolumen von etwa 95%.

11. Abgewandelter, als Sichter wirkender Zyklon, insbesondere zur Verwendung in dem Verfahren nach den Ansprüchen 1 bis 7 mit einem zylindrischen Oberteil und einem konischen Unterteil, welche durch eine Flanschverbindung miteinander verbunden sind, die Durchlässe aufweist, einem Tauchrohr im Oberteil und einer Schleuse am unteren Ende des konischen Teils, dadurch gekennzeichnet, daß das Oberteil (1) in das konische Unterteil (2) eintaucht und in der Flanschverbindung (4) senkrecht zur Zyklonachse verlaufende, durch Stellschrauben einstellbare Durchlaßöffnungen (8) vorgesehen sind.

12. Abgewandelter, als Sichter wirkender Zyklon nach Anspruch 11, dadurch gekennzeichnet, daß auf dem Tauchrohr (6) ein Drallkörper (7) vorgesehen ist.